# EUROPÄISCHE PATENTANMELDUNG

(11) **EP 0 764 552 A2**
(43) Veröffentlichungstag der Anmeldung: **26.03.1997**
(21) Anmeldenummer: 96111429.5
(22) Anmeldetag: 16.07.1996
(51) Int. Cl.: B60H 3/02

(54) **Vorrichtung zur Lufttrocknung, insbesondere für Kraftfahrzeuge**

(30) Priorität: 28.07.1995 DE 19527638
(71) Anmelder: Bayerische Motoren Werke Aktiengesellschaft, 80788 München (DE); MERCEDES-BENZ AG, 70327 Stuttgart (DE)
(72) Erfinder: Khelifa, Noureddine, Dr., 70180 Stuttgart (DE); Höppler, Robert, Dr., 85123 Karlskron (DE); Odebrecht, Wolfgang, Dipl.-Ing., 71067 Sindelfingen (DE)
(74) Vertreter: Riedel, Peter, Dipl.-Ing.

(57) **Zusammenfassung**

Die Erfindung betrifft eine Vorrichtung zur Lufttrocknung eines dem Fahrzeuginnenraum zugeführten Luftstroms. In einem Luftführungsgehäuse (5) sind zwei parallele Luftströmungswege gebildet und in jedem der Luftströmungswege ist ein ein Adsorbens enthaltender Reaktor (12, 13) vorgesehen. Mittels Luftstromsteuerelementen (20, 21, 22) ist jeweils einer der Reaktoren (12, 13) im Adsorptionsbetrieb, während der andere Reaktor sich im Desorptionsbetrieb befindet. Zur Aufheizung des Desorptionsluftstromes ist ein Luft/Luft-Wärmetauscher (7) vorgesehen, in dem der aus dem Reaktor ausgetretene Desorptionsluftstrom seine Wärmeenergie abgibt, um den Desorptionsluftstrom vor Eintritt in den Reaktor auf ein höheres Temperaturniveau anzuheben.

## Beschreibung

Die Erfindung betrifft eine Vorrichtung zur Lufttrocknung eines dem Fahrzeuginnenraum zugeführten Luftstroms der im Oberbegriff des Anspruchs 1 angegebenen Gattung.

Aus der DE-A 20 50 898 ist eine Vorrichtung zur Lufttrocknung bekannt, bei der ein flexibles Band, nämlich ein mit Lithiumchlorid getränktes Textilband vorgesehen ist. Über einen Antrieb wird das Band umlaufend bewegt, so daß fortlaufend ein regenerierter Bandabschnitt vom zu trocknenden Luftstrom durchströmt ist. Die Regeneration erfolgt durch Vorbeiführen des Bandes an einer Heizeinrichtung. Problematisch ist die Aggressivität der Salzlösungen gegenüber Metallen, was zu Korrosion führt. Auch muß aufgrund einer möglichen Instabilität durch Auskristallisieren des Salzes eine Steuerung der Desorptionstemperatur oder eine ständige Kontrolle der Lösungskonzentration erfolgen, wobei eine zur Desorption vorgesehene Heizeinrichtung äußerst leistungsstark sein muß, um eine ausreichende Regeneration des rasch umlaufenden Bandes zu gewährleisten. Dennoch ist eine vollständige Trocknung der Luft nicht möglich.

In der DE-A 23 47 335 ist eine Belüftungsvorrichtung für einen Kampfwagen beschrieben, in der unter anderem eine Entfeuchtungsvorrichtung angeordnet ist. Diese Entfeuchtungsvorrichtung besteht aus zwei zu einer Baueinheit vereinigten Entfeuchtern, die jeweils in einem Gehäuse Feuchtigkeit absorbierende Mittel enthalten, die regenerierbar sind. Die zwei Entfeuchter sind an Luftführungsleitungen angeschlossen, in denen einerseits ein zu trocknender Frischluftstrom und andererseits ein warmer Regenerationsluftstrom geführt sind. Zur Erwärmung des Regenerationsluftstromes ist eine Heizung vorgesehen. Über Umsteuereinrichtungen in den Luftführungsleitungen zu beiden Seiten der Entfeuchtungsvorrichtung wird der jeweils funktionsfähige Entfeuchter mit dem trockenen, Feuchtigkeit absorbierenden Mittel in den Belüftungsstrom eingeschaltet, während gleichzeitig der mit Feuchtigkeit beladene Entfeuchter durch von der Umgebungsluft angesaugte und aufgeheizte Luft getrocknet wird. Bei dieser bekannten Anordnung wird ausschließlich Frischluft von außen angesaugt, die entfeuchtet und gefiltert wird und anschließend aus dem Kampfwageninnenraum in die Umgebungsluft austritt. Die Regenerationsluft wird stets vollständig von außen angesaugt, so daß bei niedrigen Außentemperaturen eine enorme Heizleistung erforderlich ist, um überhaupt eine Regeneration des jeweiligen Entfeuchters zu bewirken. Für Kraftfahrzeuge mit abwärmearmen Antrieben ist die bekannte Einrichtung aus energetischen Gründen nicht verwendbar, da die im Innenraum enthaltene Wärmeenergie ungenutzt an die Außenluft abgegeben wird und zur Erwärmung der Regenerationsluft eine große Heizleistung zur Verfügung stehen muß.

In der älteren Patentanmeldung P 44 08 796.9 ist eine Lufttrocknungsvorrichtung für Fahrzeuginnenräume beschrieben, bei der in einem Gehäuse zwei parallele Luftströmungswege gebildet sind. In jedem der Luftströmungswege befindet sich ein Reaktor mit einem Adsorbens. Mit Hilfe von Luftstromsteuerelementen zum Einstellen der Luftströme durch die Reaktoren werden letztere im gegensinnigen Betrieb und im jeweiligen Wechsel von einem Adsorptionsluftstrom bzw. einem Desorptionsluftstrom beaufschlagt.

Der Erfindung liegt die Aufgabe zugrunde, eine Vorrichtung der eingangs genannten Gattung zu schaffen, bei welcher sowohl die Lufttrocknung als auch die Desorption des Reaktors auf energiesparende Weise möglich ist.

Diese Aufgabe wird durch eine Vorrichtung mit den Merkmalen des Anspruchs 1 gelöst.

Die wesentlichen Vorteile des Erfindungsgegenstandes sind darin zu sehen, daß die Wärmeenergie, die zur Desorption des Reaktors erforderlich ist, zumindest weitestgehend aus dem Abluftstrom gewonnen wird.

In bevorzugter Ausgestaltung ist der Wärmetauscher als Kreuzstromwärmetauscher ausgeführt und besteht aus einem Paket parallel ausgerichteter Platten, zwischen denen mit den Platten stoffschlüssig verbundene Wellrippen angeordnet sind.

Eine besonders kompakte Anordnung wird dadurch erreicht, daß in dem Luftführungsgehäuse eine gemeinsame Hauptluftkammer und zwei getrennte Nebenluftkammern gebildet sind und jeder der Reaktoren zwischen der Hauptluftkammer und einer der Nebenluftkammern angeordnet ist und daß die Luftstromsteuerelemente in der Hauptluftkammer und den Nebenluftkammern vorgesehen sind, durch die wechselseitig die Reaktoren vom Adsorptionsbetrieb zum Desorptionsbetrieb und umgekehrt umsteuerbar sind. Dabei ist es zweckmäßig, daß die Luftstromsteuerelemente in der Hauptluftkammer und den Nebenluftkammern von einer gemeinsamen Betätigungsvorrichtung antreibbar sind. Die Klappen nehmen jeweils lediglich zwei Endstellungen ein, die der jeweiligen Betriebsart der Reaktoren entsprechen. Der im Adsorptionsbetrieb befindliche Reaktor ist abströmseitig mit einer Ausgangskammer im Luftführungsgehäuse verbunden, von welcher aus der Luftstrom zum Fahrzeuginnenraum geführt wird. Der im Desorptionsbetrieb befindliche Reaktor ist abströmseitig an einen Luftkanal angeschlossen, durch welchen die Abluft dem Wärmetauscher zugeführt wird.

Vorzugsweise ist der Wärmetauscher quer zur Längsrichtung der Hauptluftkammer angeordnet, und zwar unmittelbar vor dieser, damit der Luftstrom ohne Richtungsänderung in die Hauptluftkammer eintreten kann. In dem Luftführungsgehäuse ist zweckmäßigerweise eine Eingangskammer gebildet, von der mindestens ein Luftkanal für den Adsorptionsluftstrom ausgeht. Außerdem schließt sich an die Eingangskammer der Wärmetauscher an, durch den der Desorptionsluftstrom aus der Eingangskammer austritt. Da sich die Hauptluftkammer zwischen den beiden Nebenluftkammern befindet, ist es vorteilhaft, daß der Wärmetauscher mittig zwischen zwei Luftkanälen, die zu den Nebenluftkammern führen, angeordnet ist.

Der Adsorptionsluftstrom wird in einem der Reaktoren entfeuchtet, wobei mit dem Binden der Feuchtigkeit im Reaktormaterial auch ein Teil der Schadstoffe adsorbiert werden. Damit der Luftstrom von weiteren Schadstoffen befreit wird, ist es vorteilhaft, in der Ausgangskammer ein Luftfilter anzuordnen, das vorzugsweise als Aktivkohlefilter ausgebildet ist. Der Luftkanal, der den Desorptionsluftstrom abströmseitig des Reaktors zu dem Wärmetauscher führt, ist vorzugsweise so gestaltet, daß er sich entlang einer Seite des Luftführungsgehäuses erstreckt und durch einen flachen Gehäusevorsprung gebildet ist. Ein Zwischenboden dient als Trennwand des Luftkanals von der Hauptluftkammer und den Nebenluftkammern, wobei dieser Zwischenboden im abströmseitigen Bereich jeder Nebenluftkammer eine verschließbare Öffnung besitzt, durch die der Desorptionsluftstrom aus der Nebenluftkammer in den Luftkanal treten kann.

Da möglicherweise die Temperatur des Desorptionsluftstroms nicht für eine genügend rasche Desorption ausreicht, kann es vorteilhaft sein, daß im Desorptionsluftstrom vor dem Reaktor eine Heizvorrichtung angeordnet ist, die beispielsweise eine PTC-Heizung oder ein flüssigkeitsdurchströmter Heizkörper sein kann, wobei als Flüssigkeit ggf. ein Wasser/Glykol-Gemisch benutzt wird, insbesondere bei Nutzung der in einem Antriebsaggregat anfallenden Abwärme. Besonders zweckmäßig ist es dabei, die Heizvorrichtung zwischen dem Wärmetauscher und der Hauptluftkammer anzuordnen. Damit die Heizvorrichtung bedarfsoptimiert betrieben wird, ist es vorteilhaft, daß ein Temperatursensor, der die Desorptionstemperatur erfaßt, und eine Steuerschaltung vorgesehen sind, durch die die Heizleistung der Heizvorrichtung steuerbar ist.

Zur optimalen Nutzung des Adsorptionsmaterials in den Reaktoren ist es zweckmäßig, die Reaktoren nicht mit Schmutzpartikeln zu belasten, da diese infolge Ablagerung auf der Oberfläche des Sorbens die Adsorptionsfähigkeit beeinträchtigen würden. Es ist daher von Vorteil, in dem Luftführungsgehäuse ein Schwebstoffilter vorzusehen, das in Luftströmungsrichtung stromauf der Reaktoren liegt. Das Schwebstoffilter sollte so gestaltet sein, daß der Gesamtluftstrom das Filter beaufschlagt. Da ein solches Filter üblicherweise nicht regenerationsfähig ist, wird das Schwebstoffilter leicht austauschbar, beispielsweise in Form einer Filterkassette ausgeführt.

Ein Ausführungsbeispiel der erfindungsgemäßen Vorrichtung ist nachstehend anhand der Zeichnung näher erläutert. In der Zeichnung zeigt:
- Fig. 1: eine schematische Darstellung eines Umluftkanals einer Belüftungsanlage für ein Kraftfahrzeug mit einer Vorrichtung zur Entfeuchtung der Luft,
- Fig. 2: eine perspektivische Darstellung der Vorrichtung,
- Fig. 3: einen Schnitt entlang der Linie III-III in Fig. 2,
- Fig. 4: einen Schnitt entlang der Linie IV-IV in Fig. 3,
- Fig. 5: einen Schnitt entlang der Linie V-V in Fig. 4,
- Fig. 6: eine Ausführungsvariante der Fig. 5.

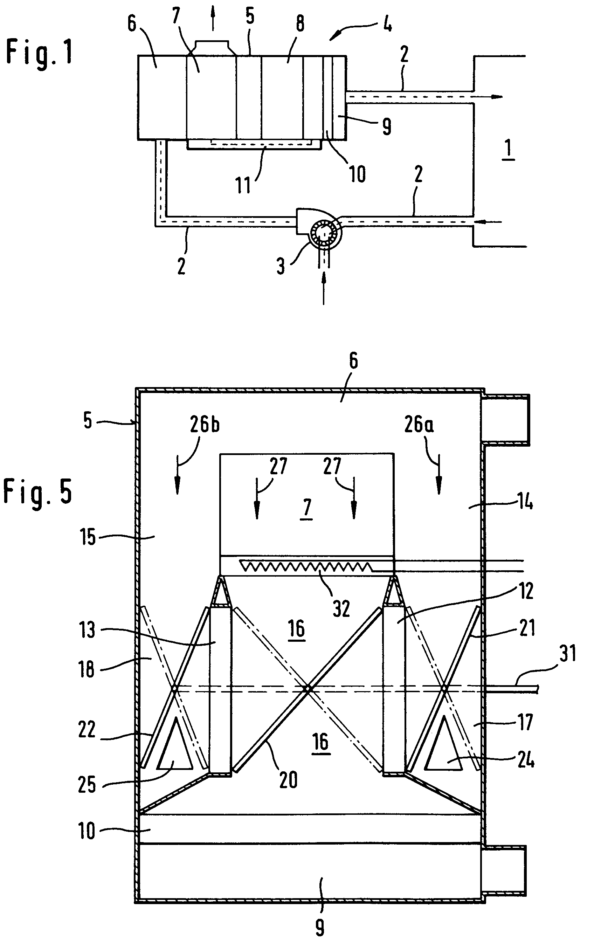

In Fig. 1 ist schematisch eine Belüftungsanlage für einen Fahrzeuginnenraum 1 gezeigt, bei der in einem Luftführungskanal 2 ein Gebläse 3 und eine Lufttrocknungsvorrichtung 4 vorgesehen sind. Das Gebläse 3 kann wahlweise Luft aus dem Fahrzeuginnenraum 1 und/oder Frischluft ansaugen. Druckseitig ist das Gebläse 3 mit einer in einem Gehäuse 5 der Vorrichtung 4 gebildeten Eingangskammer 6 verbunden. Die Vorrichtung 4 umfaßt außerdem in dem Gehäuse 5 einen Wärmetauscher 7, der als Luft/Luft-Wärmetauscher ausgeführt ist, sowie ein Sorbens enthaltende Reaktormittel 8, wobei das Sorbens beispielsweise Silicagel, Zeolith oder dergleichen ist. Abströmseitig der Reaktormittel 8 ist ein in einer Ausgangskammer 9 angeordneter Aktivkohlefilter 10 vorgesehen, der zur Filterung der dem Fahrzeuginnenraum zugeführten Luft dient. An dem Gehäuse 5 befindet sich ein Luftkanal 11, durch den ein Desorptionsluftstrom von den Reaktormitteln 8 zum Wärmetauscher 7 geführt wird. Die Lufttrocknungsvorrichtung 4 kann selbstverständlich auch mit einer Heizungs- oder Klimaanlage eines Kraftfahrzeugs kombiniert sein.

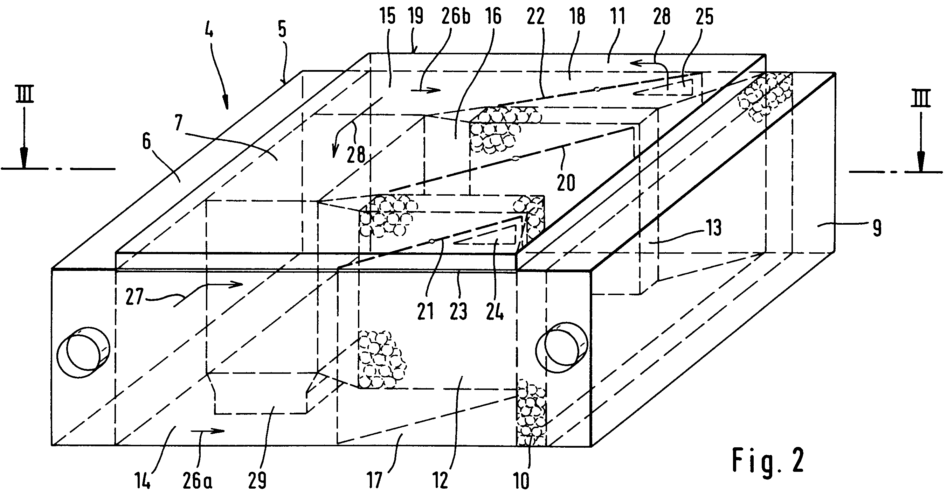

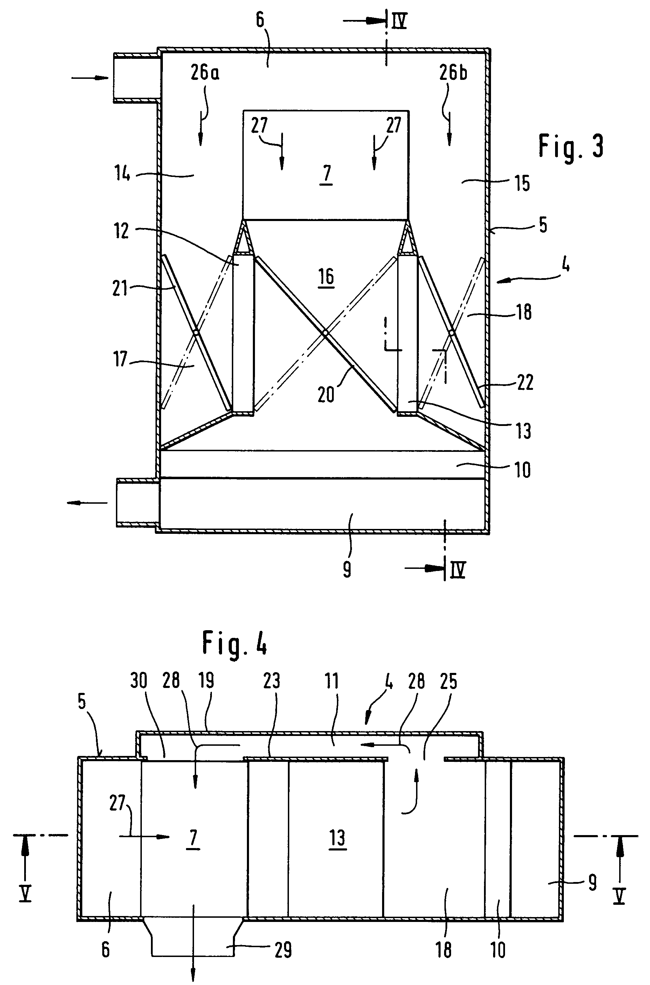

Bei der in den Fig. 2 und 3 gezeigten Vorrichtung 4 zur Trocknung des dem Fahrzeuginnenraum 1 zugeführten Luftstroms umfassen die Reaktormittel zwei in dem Gehäuse 5 angeordnete Reaktoren 12 und 13, die parallel zueinander ausgerichtet sind und zwischen denen eine gemeinsame Hauptluftkammer 16 gebildet ist. Mit der anderen Seite begrenzen die Reaktoren 12, 13 jeweils eine Nebenluftkammer 17 und 18, die sich parallel zur Längsrichtung der Reaktoren erstrecken. Jeder Reaktor 12, 13 bildet eine luftdurchlässige Wand zwischen den Nebenluftkammern 17, 18 und der Hauptluftkammer 16. Die Hauptluftkammer 16 und die Nebenluftkammern 17, 18 sind an ihren der Eingangskammer 6 zugewandten Enden offen, wobei vor dem Eingang der Hauptluftkammer 16 der Wärmetauscher 7 vorgesehen ist.

Der Wärmetauscher 7 ist vorzugsweise als Kreuzstromwärmetauscher ausgeführt und besteht aus einem Paket parallel ausgerichteter Platten zwischen denen Wellrippen angeordnet und stoffschlüssig mit diesen verbunden sind. Wegen der Lage der Hauptluftkammer 16 in der Mitte des Gehäuses 5 befindet sich auch der Wärmetauscher 7 in der Mitte, so daß auf jeder Seite des Wärmetauschers ein zu den Nebenluftkammern 17, 18 führender Luftkanal 14, 15 gebildet ist.

In jeder Nebenluftkammer 17, 18 und der Hauptluftkammer 16 ist ein als Klappe ausgeführtes Luftstromsteuerelement 20, 21, 22 angeordnet, das sich diagonal in der jeweiligen Kammer 17, 18, 19 erstreckt und um eine Schwenkachse in der Klappenmitte schwenkbar ist, so daß die Luftstromsteuerelemente zwischen den durch die Diagonalen der Luftkammern 16, 17, 18 bestimmten Endlagen umschaltbar sind. Alle Luftstromsteuerelemente 20, 21, 22 werden gleichzeitig betätigt, vorzugsweise von einem gemeinsamen Antrieb. Die Luftstromsteuerklappe 20 in der Hauptluftkammer 16 teilt diese in jeder der beiden möglichen Stellungen in einem vorderen Bereich und einen hinteren Bereich. An den hinteren Bereich der Hauptluftkammer 16 schließt sich die Ausgangskammer 9 an, in welcher das Aktivkohlefilter 10 angeordnet ist, das sich quer zur Luftströmungsrichtung über die gesamte Breite der Ausgangskammer erstreckt.

Wie aus Fig. 2 zu ersehen ist, ist der Luftkanal 11 in einem Gehäusevorsprung 19 angeordnet, das heißt, der Luftkanal 11 wird von einem Zwischenboden 23 und dem Gehäusevorsprung gebildet, welcher vom ausgangskammerseitigen Ende der Reaktoren bis an das eingangskammerseitige Ende des Wärmetauschers 7 reicht. Im Bereich der Nebenluftkammern 17 und 18 sind in dem Zwischenboden 23 Öffnungen 24, 25 vorgesehen, die sich an den der Eingangskammer entfernt liegenden Enden der Nebenluftkammern befinden, so daß diese mit dem Luftkanal 11 verbindbar sind. Die Öffnungen 24, 25 sind je nach Stellung der Luftstromsteuerelemente 21 und 22 schließbar, wobei stets eine der Öffnungen geschlossen und die andere geöffnet ist.

Der in die Eingangskammer 6 des Gehäuses 5 eintretende Luftstrom wird in einen Adsorptionsluftstrom 26a, 26b und einen Desorptionsluftstrom 27 aufgeteilt. Der Desorptionsluftstrom 27 durchströmt zunächst den Wärmetauscher 7 und tritt in die Hauptluftkammer 16 ein. Der Adsorptionsluftstrom 26a wird gemäß Fig. 3 aufgrund der Stellung der Luftstromsteuerelemente 20, 21 und 22 durch den Reaktor 12 geführt und dort entfeuchtet und tritt dann aus dem Reaktor 12 in den hinteren Bereich der Hauptluftkammer 16. Der Adsorptionsluftstrom wird nach Durchströmen des Aktivkohlefilters 10 als entfeuchteter und gereinigter Luftstrom dem Fahrzeuginnenraum zugeführt.

Der Desorptionsluftstrom 27 tritt aus dem Wärmetauscher 7 kommend in den vorderen Bereich der Hauptluftkammer 16 ein und wird aufgrund der Stellung des Luftstromsteuerelementes 20 durch den Reaktor 13 geführt und nimmt dort die im Adsorbermaterial eingelagerte Feuchtigkeit auf. Der den Reaktor 13 verlassende Desorptionsluftstrom tritt durch die im Zwischenboden 23 der Nebenluftkammer 18 befindliche Öffnung 25 in den Luftkanal 11, durch den ein Abluftstrom 28 dem Wärmetauscher 7 zugeführt wird. Im Wärmetauscher 7 gibt der mit Feuchtigkeit beladene Luftstrom 28 seine Wärme an die von der Eingangskammer 6 durch den Wärmetauscher 7 in die Hauptluftkammer 16 strömende Luft ab und heizt diese auf, so daß das Temperaturniveau des Desorptionsluftstromes 27 angehoben wird. Der Abluftstrom 28 wird durch einen Austrittsstutzen 29 an die Umgebungsluft abgegeben.

Werden die Luftstromsteuerelemente 20, 21, 22 in die zweite mögliche Stellung gebracht, wie dies in Fig. 3 durch gestrichelte Linien dargestellt ist, so dient der Reaktor 13 aufgrund der Stellung der Luftstromsteuerelemente 20, 21, 22 zur Entfeuchtung des Adsorptionsluftstromes 26b, der von der Nebenluftkammer 18 in den hinteren Bereich der Hauptluftkammer 16 gelangt und von dort als entfeuchteter und im Aktivkohlefilter 10 gereinigter Luftstrom dem Fahrzeuginnenraum zugeführt wird. Gleichzeitig wird der Desorptionsluftstrom 27 durch den Reaktor 12 in die Nebenluftkammer 17 geleitet und tritt durch die Öffnung 24 im Zwischenboden 23 in den Luftkanal 11, von dem er dem Wärmetauscher 7 zugeführt wird.

Die Fig. 4 zeigt einen Schnitt entlang der Linie IV-IV in Fig. 3. Für gleiche Teile stimmen die Bezugszeichen mit denjenigen der zuvor beschriebenen Fig. überein. Aus dieser Darstellung wird deutlich, daß der Desorptionsluftstrom 27 von der Eingangskammer durch den Wärmetauscher 7 dem Reaktor 13 zugeführt wird und abströmseitig des Reaktors durch die Öffnung 25 in dem Zwischenboden 23 in den Luftkanal 11 gelangt. Der Luftkanal 11 ist dabei flach ausgebildet und wird durch den Gehäusevorsprung 19 und den Zwischenboden 23 begrenzt und er erstreckt sich von dem vorderen Ende des Wärmetauschers 7 bis zum entfernt liegenden Ende des Nebenluftkanals 18. Der in dem Luftkanal 11 geführte Abluftstrom 28 tritt durch eine Öffnung 30 im Zwischenboden 23 an der Oberseite in den Wärmetauscher 7 ein und wird durch den Austrittsstutzen 29 am abströmseitigen Ende des Wärmetauschers 7 durch den Austrittsstutzen 29 zur Außenseite des Fahrzeugs und damit in die Umgebungsluft geführt.

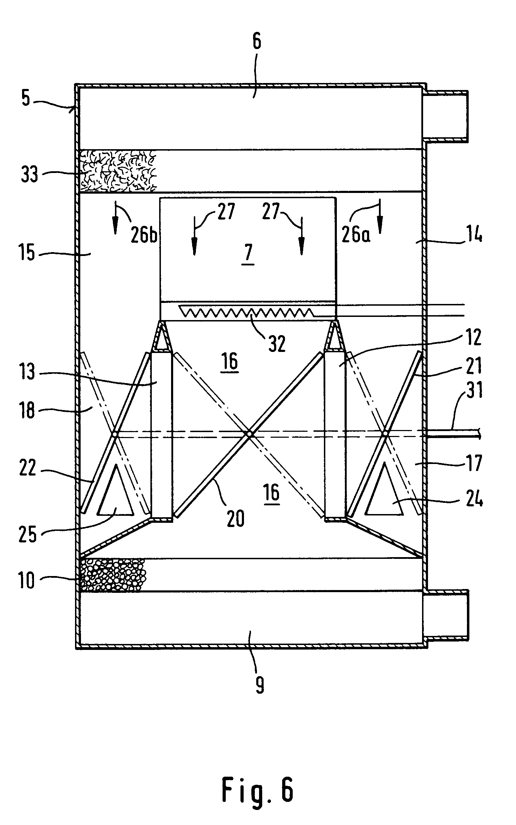

Die Fig. 5 zeigt einen Schnitt entlang der Linie V-V in Fig. 4. Aus dieser Darstellung wird die Anordnung der Öffnungen 24 und 25 im endseitigen Bereich der Nebenluftkanäle 17 und 18 sowie das Zusammenwirken mit den Luftstromsteuerklappen 21 und 22 deutlich. Mit dem Bezugszeichen 31 ist schematisch ein gemeinsamer Antrieb zur Betätigung der Luftstromsteuerklappen 20 bis 22 dargestellt. Zusätzlich zu der zuvor beschriebenen Ausführung weist die Anordnung gemäß Fig. 5 noch eine Heizvorrichtung 32 auf, die dem Wärmetauscher 7 nachgeordnet ist und sich unmittelbar vor der Hauptluftkammer 16 befindet. Die Heizvorrichtung kann beispielsweise eine PTC-Heizung oder ein vom Kühlmittel des Antriebsmotors des Kraftfahrzeugs durchströmter Heizkörper sein. Mittels einer solchen Heizvorrichtung kann die Temperatur des Desorptionsluftstromes 27 weiter angehoben werden, um eine bessere Desorptionswirkung im nachgeschalteten Reaktor zu erzielen. Damit die Heizleistung nach dem jeweiligen Bedarf eingestellt werden kann, ist zweckmäßigerweise ein Temperatursensor vorgesehen, der die Desorptionstemperatur erfaßt und über eine Steuerschaltung die Heizleistung steuert.

Die Fig. 6 zeigt eine Ausführungsvariante zu Fig. 5, wobei für gleiche Bauteile die Bezugszeichen der zuvor beschriebenen Fig. übereinstimmen. Bei der Anordnung gemäß Fig. 6 ist in der im Gehäuse 5 gebildeten Eingangskammer 6 ein Schwebstoffilter 33 angeordnet. Das gesamte Volumen des eintretenden Luftstromes wird durch das Schwebstofffilter 33 geführt und somit von allen festen Bestandteilen ab einer bestimmten Größe befreit, unabhängig von der späteren Bestimmung als Adsorptionsluftstrom 26a, 26b oder Desorptionsluftstrom 27. Durch das Ausfiltern fester Bestandteile im Schwebstoffilter 33 werden die Reaktoren 12, 13 nur in sehr geringem Maß mit Partikeln beladen, so daß das Reaktormaterial vollständig für die Adsorption zur Verfügung steht. Das Schwebstoffilter 33 ist zweckmäßigerweise als leicht austauschbarer Einsatz in der Eingangskammer 6 ausgebildet.

## Patentansprüche

1. Vorrichtung zur Lufttrocknung eines dem Fahrzeuginnenraum (1) zugeführten Luftstroms mit einem Luftführungsgehäuse (5), in dem zwei parallele Luftströmungswege gebildet sind und in jedem der Luftströmungswege ein Reaktor (12, 13) mit einem Adsorbens vorgesehen ist und mit Luftstromsteuerelementen (20, 21, 22) zum Einstellen von Luftströmen durch die Reaktoren (12, 13), wobei im jeweiligen Wechsel ein Reaktor von einem Adsorptionsluftstrom (26a, 26b) und der andere Reaktor von einem Desorptionsluftstrom (27) beaufschlagt ist, dadurch gekennzeichnet,
daß in dem Luftführungsgehäuse (5) ein Luft/Luft-Wärmetauscher (7) vorgesehen ist, der im Luftströmungsweg vor dem im Desorptionsbetrieb befindlichen Reaktor (12, 13) angeordnet ist und der außerdem von dem den Reaktor (12, 13) verlassenden Abluftstrom (28) beaufschlagt ist.

2. Vorrichtung nach Anspruch 1, dadurch gekennzeichnet,
daß der Wärmetauscher (7) als Kreuzstromwärmetauscher ausgeführt ist.

3. Vorrichtung nach Anspruch 1 oder 2, dadurch gekennzeichnet,
daß der Wärmetauscher (7) aus einem Paket parallel ausgerichteter Platten besteht, zwischen denen mit den Platten stoffschlüssig verbundene Wellrippen angeordnet sind.

4. Vorrichtung nach einem der Ansprüche 1 bis 3, dadurch gekennzeichnet,
daß in dem Luftführungsgehäuse (5) eine gemeinsame Hauptluftkammer (16) und zwei getrennte Nebenluftkammern (17, 18) gebildet sind und jeder der Reaktoren (12, 13) zwischen der Hauptluftkammer (16) und einer der Nebenluftkammern (17 oder 18) angeordnet ist und daß die Luftstromsteuerelemente (20, 21, 22) in der Hauptluftkammer (16) und den Nebenluftkammern (17, 18) vorgesehen sind, durch die wechselseitig die Reaktoren (12, 13) vom Adsorptionsbetrieb zum Desorptionsbetrieb und umgekehrt steuerbar sind.

5. Vorrichtung nach Anspruch 4, dadurch gekennzeichnet,
daß die Luftstromsteuerelemente als Luftstromsteuerklappen (20, 21, 22) ausgebildet sind und daß die in der Hauptluftkammer (16) und den Nebenluftkammern (17, 18) befindlichen Luftstromsteuerklappen von einer gemeinsamen Betätigungsvorrichtung antreibbar sind.

6. Vorrichtung nach Anspruch 4 oder 5, dadurch gekennzeichnet,
daß der im Adsorptionsbetrieb befindliche Reaktor (12 bzw. 13) abströmseitig mit einer Ausgangskammer (9) im Luftführungsgehäuse (5) verbunden ist und der im Desorptionsbetrieb befindliche Reaktor (13 bzw. 12) abströmseitig an einen Luftkanal (11) angeschlossen ist.

7. Vorrichtung nach einem der Ansprüche 4 bis 6, dadurch gekennzeichnet,
daß der Wärmetauscher (7) quer zur Längsrichtung der Hauptluftkammer (16) vor dieser angeordnet ist.

8. Vorrichtung nach Anspruch 7, dadurch gekennzeichnet,
daß in dem Luftführungsgehäuse (5) eine Eingangskammer (6) gebildet ist, von der mindestens ein Luftkanal (14, 15) für den Adsorptionsluftstrom (26a, 26b) ausgeht und wobei sich an die Eingangskammer (6) der Wärmetauscher (7) anschließt, durch den der Desorptionsluftstrom (27) aus der Eingangskammer (6) austritt und vorzugsweise der Wärmetauscher (7) mittig zwischen zwei Luftkanälen (14, 15) angeordnet ist.

9. Vorrichtung nach einem der Ansprüche 5 bis 8, dadurch gekennzeichnet,
daß in der Ausgangskammer (9) ein Luftfilter (10), vorzugsweise ein Aktivkohlefilter, angeordnet ist.

10. Vorrichtung nach einem der Ansprüche 5 bis 9, dadurch gekennzeichnet,
daß der Luftkanal (11) sich entlang einer Seite des Luftführungsgehäuses (5) erstreckt und durch einen flachen Gehäusevorsprung (19) gebildet ist, wobei vorzugsweise als Trennwand des Luftkanals (11) von der Hauptluftkammer (16) und den Nebenluftkammern (17, 18) ein Zwischenboden (23) dient und im abströmseitigen Bereich der Nebenluftkammer (17, 18) eine verschließbare Öffnung (24, 25) in dem Zwischenboden (23) vorgesehen ist.

11. Vorrichtung nach einem der vorhergehenden Ansprüche, dadurch gekennzeichnet,
daß im Desorptionsluftstrom (27) vor dem Reaktor (12 bzw. 13) eine Heizvorrichtung (32), insbesondere eine PTC-Heizung oder ein flüssigkeitsdurchströmter Heizkörper, angeordnet ist.

12. Vorrichtung nach Anspruch 5 und 11, dadurch gekennzeichnet,
daß die Heizvorrichtung zwischen dem Wärmetauscher (7) und der Hauptluftkammer (16) angeordnet ist und vorzugsweise ein Temperatursensor, der die Desorptionstemperatur erfaßt, und eine Steuerschaltung vorgesehen sind, durch die die Heizleistung der Heizvorrichtung (32) steuerbar ist.

13. Vorrichtung nach einem der vorhergehenden Ansprüche, dadurch gekennzeichnet,
daß ein Gebläse (3) vorgesehen ist, das saugseitig über einen Luftkanal mit dem Fahrzeuginnenraum (1) und druckseitig mit der Eingangskammer (6) des Luftführungsgehäuses (5) verbunden ist.

14. Vorrichtung nach einem der vorhergehenden Ansprüche, dadurch gekennzeichnet,
daß in dem Luftführungsgehäuse (5) mindestens ein Schwebstoffilter (33) vorgesehen ist, das in Luftströmungsrichtung stromauf der Reaktoren (12, 13) liegt, wobei insbesondere das Schwebstoffilter (33) vom gesamten Volumen des in das Luftführungsgehäuse (5) eintretenden Luftstroms beaufschlagt ist.
